# EUROPEAN PATENT SPECIFICATION

(11) **EP 4 357 061 B1**
(45) Date of publication and mention of the grant of the patent: **06.05.2026**
(21) Application number: 23835143.1
(22) Date of filing: 09.05.2023
(51) Int. Cl.: B23K 7/10, C10L 3/00

(54) **COMBUSTIBLE GAS**
BRENNBARES GAS
GAZ INFLAMMABLE

(30) Priority: 08.07.2022 JP 2022110098
(43) Date of publication of application: 24.04.2024
(73) Proprietor: Iwatani Industrial Gases Corporation, Osaka-shi, Osaka 530-0047 (JP)
(72) Inventor: UEHA, Hisato, Osaka-shi, Osaka 530-0047 (JP); KITA, Norihito, Osaka-shi, Osaka 530-0047 (JP); YOSHIDA, Kazuhiro, Osaka-shi, Osaka 530-0047 (JP)
(74) Representative: TBK
(86) International application number: PCT/JP2023/017490
(87) International publication number: WO 2024/009602

(56) References cited:
- WO-A1-2014/002295
- JP-A- S53 118 401
- JP-B1- 5 386 658
- JP-U- 3 189 711
- WIERZBA I ET AL: "Rich flammability limits of fuel mixtures involving hydrogen at elevated temperatures", INTERNATIONAL JOURNAL OF HYDROGEN ENERGY, ELSEVIER, AMSTERDAM, NL, vol. 25, no. 1, 1 January 2000 (2000-01-01), pages 75 - 80, XP004252840, ISSN: 0360-3199, DOI: 10.1016/S0360-3199(99)00009-9

## Description

### [TECHNICAL FIELD]

The present invention relates to a combustible gas.

### [BACKGROUND ART]

A gas cutting method of cutting an object with a combustible gas is well known. In the gas cutting method, a mixed gas in which the combustible gas is mixed with an oxygen gas is burnt, thereby preheating the object with the resulting heat. Then, at a stage in which the object has been sufficiently preheated, an oxygen gas for cutting is further supplied, and the object is cut while being oxidized.

As the combustible gas, Patent Document 1 proposed a combustible gas containing 38% by volume or more and 45% by volume or less of ethylene, with the remainder being hydrogen and unavoidable impurities (see Japanese Patent No. 4848060). This combustible gas can be easily stored, transported, etc. and enables contributing to an increase in quality of a finished state after gas cutting. Patent Document 2 proposed a combustible gas containing 18 % by volume or more to less than 40 % by volume of ethylene with the remainder being hydrogen.

### [PRIOR ART DOCUMENTS]

### [PATENT DOCUMENTS]

Patent Document 1: Japanese Patent No. 4848060
Patent Document 2: WO2014/002295

### [SUMMARY OF THE INVENTION]

### [PROBLEMS TO BE SOLVED BY THE INVENTION]

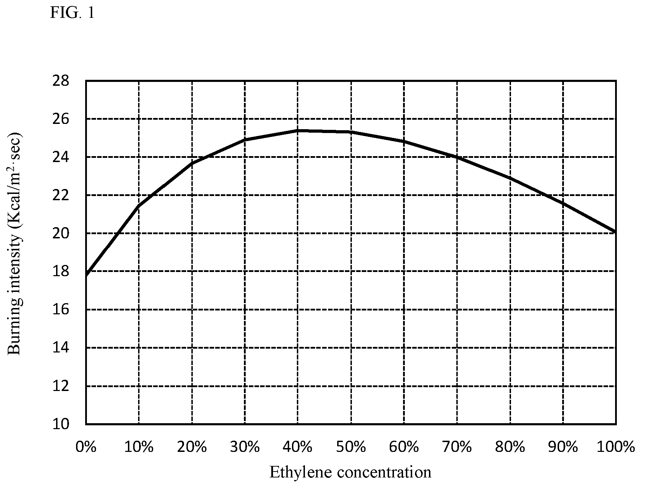

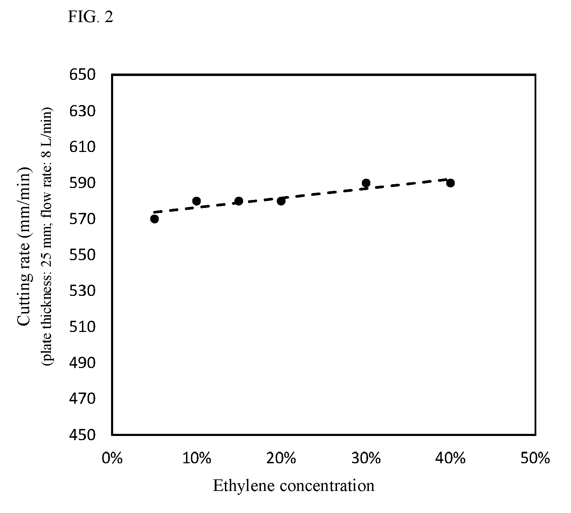

A hydrocarbon gas contained in the combustible gas serves as a calorie source, i.e., contributes to thermal power, and increases burning intensity. Thus, as shown in FIG 1, an ethylene concentration in the conventional combustible gas is set in the vicinity of a point at which the burning intensity shows a maximum. In this manner, a hydrocarbon gas concentration is typically set such that the burning intensity becomes high.

Meanwhile, owing to current environmental problems, for example, SDGs (sustainable development goals) were adopted by United Nations in 2015, and phrases such as low CO₂, decarbonization, carbon neutrality, etc. have been more and more highly publicized, raising a strong demand for a reduction of a CO₂ gas. Also in the combustible gas, an amount of the hydrocarbon gas, which may serve as a CO₂ source, is desirably as small as possible. However, as shown in FIG 1, the burning intensity is abruptly decreased when the ethylene concentration is lowered.

The present invention was made in view of the foregoing circumstances, as a result of dedicated research and development aiming, as a company which provides combustible gases, to develop a combustible gas that enables lower CO₂ emission, and an object of the invention is to provide a combustible gas that enables reducing an amount of CO₂ generated at a time of cutting an object.

### [MEANS FOR SOLVING THE PROBLEMS]

Conventionally, it has been considered that a decrease in the burning intensity leads to a decrease in a cutting rate and more time is required for cutting, thereby increasing CO₂ gas emissions; however, as a result of intensive study of the reduction of the CO₂ gas, the inventors of the present invention have found that, as shown in FIG 2, the decrease in the cutting rate is small in a combustible gas containing ethylene and hydrogen. In other words, when the ethylene concentration is reduced, the burning intensity decreases (FIG 1), but the decrease in the cutting rate is limited (FIG 2), and the increase in the cutting time is also limited. The inventors have discovered that, since a generation amount of the CO₂ gas is determined by (hydrocarbon gas content in combustible gas × cutting time), with regard to the combustible gas, a reduction in ethylene concentration brings an effect of reducing the hydrocarbon gas content much more strongly than an influence of prolongation of the cutting time, enabling largely reducing the generation amount of the CO₂ gas, and have completed the present invention.

That is to say, an aspect of the present invention is a combustible gas for use as a combustion gas for gas cutting of an object, the combustible gas containing ethylene at a concentration of 1% by volume or more and less than 15% by volume, with the remainder being hydrogen and unavoidable impurities.

In the combustible gas, a decrease in the cutting rate is small, while the concentration of ethylene, which is a hydrocarbon gas, is suppressed to be lower than an ethylene concentration at which the burning intensity is maximized; accordingly, the generation amount of the CO₂ gas can be effectively reduced.

Although the reason for the decrease in the cutting rate being small has not been identified, the inventors of the present invention have focused on the fact that the hydrogen concentration increases proportionally with a decrease in the ethylene concentration. As the hydrogen concentration increases, straightness of a flame increases and flow velocity becomes higher. It is surmised that the straightness of the flame and the high flow velocity compensate for the decrease in the burning intensity, thereby inhibiting the decrease in the cutting rate.

The combustible gas is encapsulated in a container, and a pressure in the container at 35 °C is 1 MPa or more and 50 MPa or less. By thus encapsulating the combustible gas in the container, handleability can be improved. Furthermore, by setting the pressure in the container at that time to fall within the above range, the combustible gas can be efficiently transported, while inhibiting liquefaction of ethylene.

A concentration of the unavoidable impurities is preferably 1.0% by volume or less. By thus setting the concentration of the unavoidable impurities to be less than or equal to the upper limit, characteristics of the combustible gas can be easily stabilized, and effects of the present invention can be more surely exhibited.

The object is preferably steel. The combustible gas can be particularly suitably used to cut steel. [EFFECTS OF THE INVENTION]

The combustible gas of the present invention enables reducing the amount of CO₂ generated at the time of cutting an object.

### [BRIEF DESCRIPTION OF THE DRAWINGS]

FIG 1 is a graph showing a relationship between the ethylene concentration and the burning intensity.
FIG 2 is a graph showing a relationship between the ethylene concentration and the cutting rate.
FIG 3 is a schematic view illustrating an example of production equipment of the combustible gas of the present invention.
FIG 4 is a graph showing a relationship between the ethylene concentration and the CO₂ generation amount in Examples.

### [DESCRIPTION OF EMBODIMENTS]

Hereafter, a combustible gas according to one embodiment of the present invention is described.

An aspect of the present invention is a combustible gas for use as a combustion gas for gas cutting of an object.

The object is a material that can be cut with a flame, namely, a metal material that is oxidized by being exposed to oxygen at high temperatures. Examples of the object include steel, titanium materials, and the like.

The object is preferably steel, and more preferably rolled steel for general structure. The combustible gas can be particularly suitably used to cut steel.

### Combustible Gas

The combustible gas contains ethylene at a concentration of 1% by volume or more and less than 15% by volume, with the remainder being hydrogen and unavoidable impurities.

The lower limit of the ethylene concentration is 1% by volume and more preferably 5% by volume. On the other hand, the ethylene concentration is less than 15% by volume. When the combustible gas is burnt, a whitish colored part (white core) is generated in a central portion of the flame. This white core enables an operator to confirm that the flame is generated, to adjust a position of the flame relative to an object to be cut, and/or the like. By setting the ethylene concentration to be greater than or equal to the lower limit, visibility of the white core can be improved, thereby improving working efficiency of the operator. Furthermore, by setting the ethylene concentration to be less than the upper limit, the generation amount of the CO₂ gas can be further reduced.

It is to be noted that the hydrogen concentration proportionally increases with a decrease in the ethylene concentration. As the hydrogen concentration increases, the straightness of the flame increases and the flow velocity becomes higher. The straightness of the flame and the high flow velocity lead to a high-quality cutting face (with little edge sagging or slag attachment). Since the hydrogen concentration in the combustible gas is relatively high, there is a strong tendency that a clean cutting face is obtained.

The upper limit of a content of the unavoidable impurities is preferably 1.0% by volume, more preferably 0.5% by volume, and still more preferably 0.1% by volume. By setting the content of the unavoidable impurities to be less than or equal to the upper limit, the characteristics of the combustible gas can be easily stabilized. On the other hand, the lower limit of the content of the unavoidable impurities is not particularly limited and may be 0% by volume. As referred to herein, the "unavoidable impurities" include, in addition to unintentionally contained impurities, impurities that are intentionally added within a range in which performance of the combustible gas can be maintained. Examples of such impurities that are intentionally added include nitrogen, oxygen, moisture, and the like.

The combustible gas is pressurized to be stored in a container or a tank. Of these, the combustible gas is encapsulated in the container. By thus encapsulating the combustible gas in the container, the handleability can be improved.

A pressure in the container is preferably less than or equal to a pressure at which a gas to be encapsulated in the container is not liquefied, and in light of transport efficiency, the pressure is preferably as high as possible. Specifically, the lower limit of the pressure in the container at 35 °C is 1 MPa, preferably 6 MPa, and more preferably 15 MPa. On the other hand, the upper limit of the pressure is 50 MPa and preferably 20 MPa. When the pressure is less than the lower limit, it may be difficult to efficiently transport the combustible gas. Conversely, when the pressure is greater than the upper limit, ethylene may be liquefied and the handleability may be degraded. Since the ethylene concentration in the combustible gas is relatively low, liquefaction is less likely to occur even when the pressure in the container is relatively high. Thus, by raising the pressure to increase a fill volume of the container, the transport efficiency can be improved.

### Method for Producing Combustible Gas

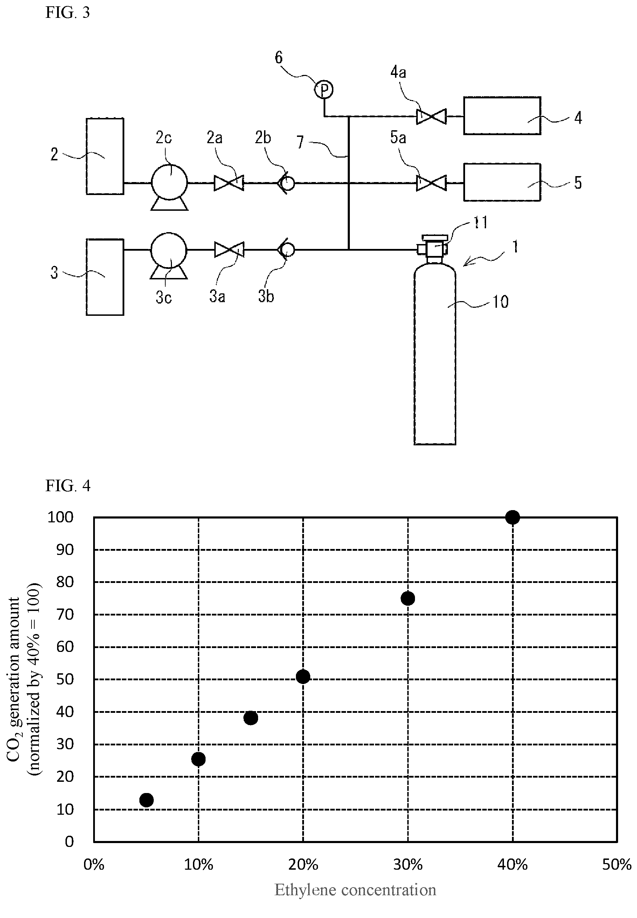

The combustible gas can be encapsulated in a container 1 by using, for example, the production equipment illustrated in FIG 3. The production equipment includes: a hydrogen gas storage portion 2; an ethylene gas storage portion 3; a gas discharge portion 4; a decompression device 5; a pressure gauge 6; and a pipe 7 which connects the hydrogen gas storage portion 2, the ethylene gas storage portion 3, the gas discharge portion 4, the decompression device 5, and the pressure gauge 6 to the container 1.

The container 1 includes: a main body portion 10 for storing the combustible gas; and a container valve 11 attached to the main body portion 10. The pipe 7 is connected to the container valve 11.

As illustrated in FIG 3, a hydrogen gas is stored in the hydrogen gas storage portion 2, and the hydrogen gas storage portion 2 is connected to the pipe 7 through a hydrogen valve 2a and a hydrogen check valve 2b. An ethylene gas is stored in the ethylene gas storage portion 3, and the ethylene gas storage portion 3 is connected to the pipe 7 through an ethylene valve 3a and an ethylene check valve 3b. The hydrogen check valve 2b and the ethylene check valve 3b inhibit backflow of the hydrogen gas and the ethylene gas into the hydrogen gas storage portion 2 and the ethylene gas storage portion 3, respectively. Furthermore, to efficiently fill the container 1 with the hydrogen gas and the ethylene gas, a hydrogen compressor 2c for compressing and pressurizing the hydrogen gas in the hydrogen gas storage portion 2 and an ethylene compressor 3c for compressing and pressurizing the ethylene gas in the ethylene gas storage portion 3 may be provided at outlets of the hydrogen gas storage portion 2 and the ethylene gas storage portion 3, respectively.

The gas discharge portion 4 enables safely discharging the gases in the pipe 7 to the outside. The gas discharge portion 4 is connected to the pipe 7 through a gas discharge valve 4a.

The decompression device 5 includes, for example, a vacuum pump and can control the pressure in the pipe 7. The decompression device 5 is connected to the pipe 7 through a decompression valve 5a.

A method for producing the combustible gas by using the above production equipment (filling method) is described. The method for producing the combustible gas includes an exhausting step, an ethylene gas-filling step, a hydrogen gas-filling step, and a container-removing step.

### Exhausting Step

In the exhausting step, a gas remaining in the main body portion 10 of the container 1 is discharged.

Specifically, in a state in which the hydrogen valve 2a, the ethylene valve 3a, the discharge valve 4a, and the decompression valve 5a are closed, the container valve 11 is opened, and it is checked with the pressure gauge 6 whether the combustible gas remains in the main body portion 10 at a pressure of greater than or equal to a specified pressure. In the case in which the combustible gas remains at a pressure of greater than or equal to the specified pressure, the discharge valve 4a is opened to discharge the combustible gas from the gas discharge portion 4. Then, the discharge valve 4a is closed.

Next, the decompression valve 5a is opened to decompress the inside of the main body portion 10 and the pipe 7. When the pressure is reduced to a desired pressure, the decompression valve 5a is closed. It is to be noted that this operation is conducted even in a case in which the discharge valve 4a has not been opened. That is to say, after the exhausting step, the main body portion 10 has a reduced pressure.

### Ethylene Gas-Filling Step

In the ethylene gas-filling step, the main body portion 10 which has been decompressed in the exhausting step is filled with the ethylene gas.

Specifically, the ethylene valve 3a is opened to fill the main body portion 10 with the ethylene gas in the ethylene gas storage portion 3. The ethylene valve 3a is closed at a point of time when the pressure in the main body portion 10, i.e., a pressure of the pressure gauge 6 reaches a pressure (partial pressure) required for the combustible gas after production to have the ethylene concentration of greater than 0% by volume and less than 38% by volume. More specifically, it is preferable that when a pressure of the combustible gas after production is denoted by P and a partial pressure of the ethylene gas is denoted by p, the partial pressure p is determined such that p/P is a desired ethylene concentration, and that the ethylene valve 3a is closed at a point of time when the partial pressure p is obtained.

### Hydrogen Gas-Filling Step

In the hydrogen gas-filling step, the main body portion 10 after the ethylene gas-filling step is filled with the hydrogen gas.

Specifically, the hydrogen valve 2a is opened to fill the main body portion 10 with the hydrogen gas in the hydrogen gas storage portion 2. The hydrogen valve 2a is closed at a point of time when the pressure in the main body portion 10, i.e., the pressure of the pressure gauge 6 reaches a pressure required for the combustible gas after production to have the ethylene concentration of greater than 0% by volume and less than 38% by volume. More specifically, the hydrogen valve 2a is preferably closed at a point of time when the pressure of the combustible gas reaches P.

### Container-Removing Step

In the container-removing step, the container valve 11 of the container 1 which has been filled with the ethylene gas and the hydrogen gas is closed, and the container 1 is removed from the pipe 7. In this manner, the container 1 can be filled with the combustible gas.

It is to be noted that in a predetermined period of time after the filling, the ethylene gas and the hydrogen gas with which the container 1 has been filled are brought into a uniformly mixed state.

### Advantages

In the combustible gas, a decrease in the cutting rate is small, while the concentration of ethylene, which is a hydrocarbon gas, is suppressed to be lower than the ethylene concentration at which the burning intensity is maximized; accordingly, the generation amount of the CO₂ gas can be effectively reduced.

### Other Embodiments

The above embodiment does not limit the configuration of the present invention. Therefore, in the above embodiment, the components of each part of the above embodiment can be omitted, replaced, or added based on the description in the present specification and general technical knowledge, and such omission, replacement, or addition should be construed as falling within the scope of the present invention.

In the above embodiment, the case in which at the time of filling the container with the combustible gas, the ethylene gas filling is performed first has been described; however, the hydrogen gas filling may be performed first.

In the above embodiment, the case in which at the time of filling the container with the combustible gas, the pressure gauge is used to obtain the combustible gas having the desired ethylene concentration has been described; however, a weight of the gas(es) for filling may be adopted.

Furthermore, in the above embodiment, at the time of filling the container with the combustible gas, the container is filled with each gas such that the desired partial pressure is obtained; however, the following procedure is also possible: the gases are mixed at a low pressure such that the ethylene gas has the desired concentration, the pressure of the resulting mixed gas is increased with a compressor, and the container is filled with the mixed gas.

Moreover, in the above embodiment, the case in which the container is filled with the combustible gas has been described; however, the combustible gas may be produced by mixing the ethylene gas and the hydrogen gas at a place where cutting is to be implemented, and may be used without filling the container.

### EXAMPLES

Hereinafter, the present invention is described further in detail by way of Examples; however, the present invention is not limited to the Examples.

### CO₂ Generation Amount

As the combustible gas containing ethylene, with the remainder being hydrogen and unavoidable impurities, 6 types of combustible gases having ethylene concentrations of 5% by volume, 10% by volume, 15% by volume, 20% by volume, 30% by volume, and 40% by volume were prepared.

Rolled steel for general structure with a plate thickness of 25 mm was prepared. Each combustible gas was used to cut the rolled steel for general structure by 300 mm, and cutting time was measured. At the time of cutting the steel with the combustible gas, the cutting was not started until the steel was heated, but the cutting time does not include this time period. In other words, the cutting time refers to time from the start of the cutting until the steel was cut by 300 mm. It is to be noted that a flow rate of the combustible gas during the cutting was set to 8 L/min.

Since the flow rate of the combustible gas was fixed to 8 L/min, the CO₂ generation amount in the case of using each combustible gas is proportional to (ethylene concentration × cutting time). FIG 4 shows the relationship between the ethylene concentration and the CO₂ generation amount (ethylene concentration × cutting time). It is to be noted that FIG 4 shows normalized data in which (ethylene concentration × cutting time) in the case of using the combustible gas having the ethylene concentration of 40% by volume is 100.

It is found from the graph in FIG 4 that in a region of the ethylene concentration of less than 38% by volume, a reduction in the ethylene concentration brings an effect of reducing the hydrocarbon gas content much more strongly than an influence of prolongation of the cutting time, enabling largely reducing the generation amount of the CO₂ gas.

### Visibility of White Core

As the combustible gas containing ethylene, with the remainder being hydrogen and unavoidable impurities, 7 types of combustible gases having ethylene concentrations shown in Table 1 were prepared.

A flame was generated using each of the 7 types of combustible gases, and visibility of a white core was visually evaluated. Evaluation criteria are as follows.

### Evaluation criteria

A: Favorable, with the white core being clearly visible
B: No problem in practical use, with the white core being visible
C: Impractical, with the white core being faintly visible but difficult to perceive
D: No visible white core

**Table 1**

| Ethylene concentration | 0% | 1% | 5% | 10% | 20% | 30% | 40% |
|---|---|---|---|---|---|---|---|
| Visibility of white core | D | B | B | B | B | A | A |

The results in Table 1 indicate that with regard to the combustible gas having the ethylene concentration of 1% by volume or more, the visibility of the white core does not involve any practical problem.

### [INDUSTRIAL APPLICABILITY]

As described above, the combustible gas of the present invention enables reducing the amount of CO₂ generated at the time of cutting an object.

### [Explanation of the Reference Symbols]

- 1: Container
- 10: Main body portion
- 11: Container valve
- 2: Hydrogen gas storage portion
- 2a: Hydrogen valve
- 2b: Hydrogen check valve
- 2c: Hydrogen compressor
- 3: Ethylene gas storage portion
- 3a: Ethylene valve
- 3b: Ethylene check valve
- 3c: Ethylene compressor
- 4: Gas discharge portion
- 4a: Discharge valve
- 5: Decompression device
- 5a: Decompression valve
- 6: Pressure gauge
- 7: Pipe

## Claims

1. A combustible gas for use as a combustion gas for gas cutting of an object, the combustible gas comprising ethylene at a concentration of 1% by volume or more and less than 15% by volume, with a remainder being hydrogen and unavoidable impurities,
wherein
the combustible gas is encapsulated in a container, and
a pressure in the container at 35 °C is 1 MPa or more and 50 MPa or less.

2. The combustible gas according to claim 1, wherein a concentration of the unavoidable impurities is 1.0% by volume or less.

3. The combustible gas according to claim 1 or 2, wherein the object is steel.

4. Use of a combustible gas as a combustion gas for gas cutting of an object, the combustible gas comprising ethylene at a concentration of 1% by volume or more and less than 15% by volume, with a remainder being hydrogen and unavoidable impurities.

## Patentansprüche

1. Brennbares Gas zur Verwendung als Brenngas zum Brennschneiden eines Gegenstandes, wobei das brennbare Gas Ethylen bei einer Konzentration von 1 Vol.-% oder mehr und weniger als 15 Vol.-% enthält, wobei es sich bei dem Rest um Wasserstoff und unvermeidbare Verunreinigungen handelt,
wobei
das brennbare Gas in einem Behälter eingeschlossen ist, und
der Druck in dem Behälter bei 35 °C 1 MPa oder mehr und 50 MPa oder weniger beträgt.

2. Brennbares Gas nach Anspruch 1, wobei die Konzentration der unvermeidbaren Verunreinigungen 1,0 Vol.-% oder weniger beträgt.

3. Brennbares Gas nach Anspruch 1 oder 2, wobei es sich bei dem Gegenstand um Stahl handelt.

4. Verwendung eines brennbaren Gases als Brenngas zum Brennschneiden eines Gegenstandes, wobei das brennbare Gas Ethylen bei einer Konzentration von 1 Vol.-% oder mehr und weniger als 15 Vol.-% enthält, wobei es sich bei dem Rest um Wasserstoff und unvermeidbare Verunreinigungen handelt.

## Revendications

1. Gaz combustible destiné à être utilisé comme gaz de combustion pour la coupe au gaz d'un objet, le gaz combustible comprenant de l'éthylène à une concentration de 1 % en volume ou plus et inférieure à 15 % en volume, le reste étant de l'hydrogène et des impuretés inévitables,
dans lequel
le gaz combustible est encapsulé dans un récipient, et
une pression dans le récipient à 35 °C est de 1 MPa ou plus et 50 MPa ou moins.

2. Gaz combustible selon la revendication 1, dans lequel une concentration des impuretés inévitables est de 1,0 % en volume ou moins.

3. Gaz combustible selon la revendication 1 ou 2, dans lequel l'objet est de l'acier.

4. Utilisation d'un gaz combustible en tant que gaz de combustion pour la coupe au gaz d'un objet, le gaz combustible comprenant de l'éthylène à une concentration de 1 % en volume ou plus et inférieure à 15 % en volume, le reste étant de l'hydrogène et des impuretés inévitables.
